# EUROPEAN PATENT APPLICATION

(11) **EP 3 809 493 A1**
(43) Date of publication of application: **21.04.2021**
(21) Application number: 19819318.7
(22) Date of filing: 07.06.2019
(51) Int. Cl.: H01M 4/133, C01B 32/225, C01B 33/02, H01M 4/134, H01M 4/36, H01M 4/48, H01M 4/62

(54) **NEGATIVE ELECTRODE MATERIAL FOR SECONDARY BATTERY, NEGATIVE ELECTRODE FOR SECONDARY BATTERY, AND SECONDARY BATTERY**

(30) Priority: 15.06.2018 JP 2018114465
(71) Applicant: SEKISUI CHEMICAL CO., LTD., Osaka-shi Osaka 530-8565 (JP)
(72) Inventor: SUN, Rende, Mishima-gun, Osaka 618-0021 (JP); NOZATO, Shoji, Mishima-gun, Osaka 618-0021 (JP); NAKASUGA, Akira, Mishima-gun, Osaka 618-0021 (JP)
(74) Representative: Ter Meer Steinmeister & Partner
(86) International application number: PCT/JP2019/022676
(87) International publication number: WO 2019/240021

(57) **Abstract**

A negative electrode material for a secondary battery is provided that can prevent deterioration of the cycle characteristic during the charge and discharge of the secondary battery and can enhance the initial coulombic efficiency. A negative electrode material for a secondary battery, including: a negative electrode active material containing a metal or a metal compound that can absorb and release an alkali metal ion or an alkaline earth metal ion, and containing a first carbon material that can absorb and release the alkali metal ion or the alkaline earth metal ion; and a conductive auxiliary containing a second carbon material different from the first carbon material, the negative electrode material having a capacity of 400 mAh/g or more, and the second carbon material being partially exfoliated graphite having a graphite structure in which graphite is partially exfoliated.

## Description

### TECHNICAL FIELD

The present invention relates to a negative electrode material for a secondary battery, including a negative electrode active material and a conductive auxiliary, and to a negative electrode for a secondary battery and a secondary battery, in which the negative electrode material for a secondary battery is used.

### BACKGROUND ART

Conventionally, secondary batteries have been actively researched and developed for mobile devices, hybrid vehicles, electric vehicles, home electricity storage applications, and the like. As a negative electrode active material used in the negative electrode of such a secondary battery, Si having a high theoretical capacity has been attracting attention. However, when Si is used as a negative electrode active material, the volume change due to charge and discharge is extremely large, and the negative electrode active material is sometimes cracked or peeled off from the electrode. Therefore, the cycle characteristic during the charge and discharge and the initial coulombic efficiency are sometimes deteriorated.

Patent Document 1 below discloses a negative electrode material for a lithium ion secondary battery, in which a fine particle-exfoliated graphite composite is used as a negative electrode active material. It is described that in the above-described fine particle-exfoliated graphite composite, fine particles such as Si are included in partially exfoliated graphite having a structure in which graphene is partially exfoliated. It is described that the negative electrode material for a lithium ion secondary battery may include acetylene black or Ketjen black as a conductive dope aid. Furthermore, Patent Document 1 describes that use of such a negative electrode material for a lithium ion secondary battery can suppress deterioration of the cycle characteristic during the charge and discharge.

### Related Art Document

### Patent Document

Patent Document 1: JP 2014-197551 A

### SUMMARY OF THE INVENTION

### PROBLEMS TO BE SOLVED BY THE INVENTION

In recent years, secondary batteries having further excellent battery performance have been increasingly developed for applications to hybrid vehicles, electric vehicles, and the like. As a result, there is a demand for a negative electrode material for a secondary battery, that can further prevent deterioration of the cycle characteristic during the charge and discharge of the secondary battery and can further enhance the initial coulombic efficiency.

An object of the present invention is to provide a negative electrode material for a secondary battery, that can prevent deterioration of the cycle characteristic during the charge and discharge of the secondary battery and can enhance the initial coulombic efficiency, and to provide a negative electrode for a secondary battery and a secondary battery, in which the negative electrode material for a secondary battery is used.

### MEANS FOR SOLVING THE PROBLEMS

The negative electrode material for a secondary battery according to the present invention is a negative electrode material for a secondary battery, including: a negative electrode active material containing a metal or a metal compound that can absorb and release an alkali metal ion or an alkaline earth metal ion, and containing a first carbon material that can absorb and release the alkali metal ion or the alkaline earth metal ion; and a conductive auxiliary containing a second carbon material different from the first carbon material, the negative electrode material having a capacity of 400 mAh/g or more, and the second carbon material being partially exfoliated graphite having a graphite structure in which graphite is partially exfoliated.

In a specific aspect of the negative electrode material for a secondary battery according to the present invention, a capacity of the negative electrode material for a secondary battery is 400 mAh/g or more and 3,000 mAh/g or less.

In another specific aspect of the negative electrode material for a secondary battery according to the present invention, the metal or the metal compound is at least one selected from a group consisting of Co, Mn, Ni, P, Sn, Ge, Si, Ti, Zr, V, Al, and compounds thereof. The metal or the metal compound is preferably Si or a compound of Si.

In still another specific aspect of the negative electrode material for a secondary battery according to the present invention, a coating layer containing a carbon material is provided on a surface of the metal or the metal compound.

In still another specific aspect of the negative electrode material for a secondary battery according to the present invention, the first carbon material is a carbon material having a graphene layered structure.

In still another specific aspect of the negative electrode material for a secondary battery according to the present invention, the first carbon material has a particle cross section equivalent to an ellipse having an average ratio of a short diameter to a long diameter (short diameter/long diameter) of 0.20 or more as observed by an electron microscope.

In still another specific aspect of the negative electrode material for a secondary battery according to the present invention, the first carbon material has a specific gravity of 2.0 g/cm³ or more as measured by a helium gas displacement method.

In still another specific aspect of the negative electrode material for a secondary battery according to the present invention, the second carbon material is contained in the negative electrode material for a secondary battery at a content of 20% by weight or less.

In still another specific aspect of the negative electrode material for a secondary battery according to the present invention, a ratio of the content of the second carbon material to a content of the first carbon material (second carbon material/first carbon material) is 0.5 or less.

The negative electrode for a secondary battery according to the present invention includes the negative electrode material for a secondary battery, configured in accordance with the present invention.

The secondary battery according to the present invention includes the negative electrode for a secondary battery, configured in accordance with the present invention.

### EFFECT OF THE INVENTION

According to the present invention, it is possible to provide a negative electrode material for a secondary battery, that can prevent deterioration of the cycle characteristic during the charge and discharge of the secondary battery and can enhance the initial coulombic efficiency, and to provide a negative electrode for a secondary battery and a secondary battery, in which the negative electrode material for a secondary battery is used.

### BRIEF DESCRIPTION OF DRAWING

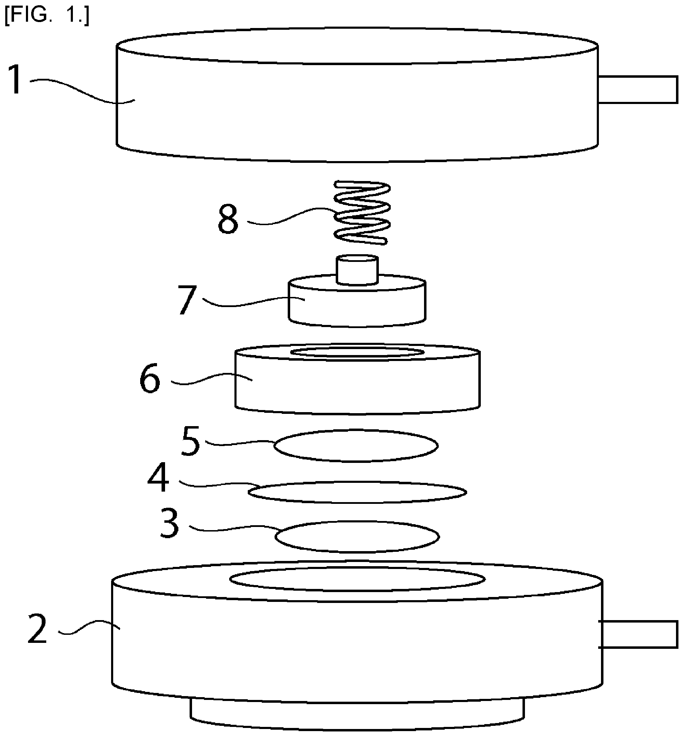

[Fig. 1] Fig. 1 is an exploded perspective view showing a schematic configuration of a coin cell used for the evaluation in Examples and Comparative Examples.

### MODES FOR CARRYING OUT THE INVENTION

Hereinafter, details of the present invention will be described.

### [Negative electrode material for secondary battery]

The negative electrode material for a secondary battery according to the present invention is used in a negative electrode of a secondary battery. The negative electrode material for a secondary battery has a capacity of 400 mAh/g or more. The negative electrode material for a secondary battery includes a negative electrode active material and a conductive auxiliary. The negative electrode active material contains a metal or a metal compound that can absorb and release an alkali metal ion or an alkaline earth metal ion, and a first carbon material that can absorb and release the alkali metal ion or the alkaline earth metal ion. The conductive auxiliary contains a second carbon material different from the first carbon material. The second carbon material is partially exfoliated graphite having a graphite structure in which graphite is partially exfoliated.

Because the negative electrode material for a secondary battery according to the present invention includes the negative electrode active material and the conductive auxiliary, the negative electrode material can prevent deterioration of the cycle characteristic during the charge and discharge of the secondary battery and can enhance the initial coulombic efficiency.

In the present invention, the capacity of the negative electrode material for a secondary battery is preferably 400 mAh/g or more and more preferably 500 mAh/g or more, and preferably 3,000 mAh/g or less, more preferably 2,000 mAh/g or less, and still more preferably 1,500 mAh/g or less. When the capacity of the negative electrode material for a secondary battery is the above-described lower limit or more, the capacity of the secondary battery can be further increased. When the capacity of the negative electrode material for a secondary battery is the above-described upper limit or less, the negative electrode material can further prevent deterioration of the cycle characteristic during the charge and discharge of the secondary battery and can further enhance the initial coulombic efficiency.

Hereinafter, details of each material included in the negative electrode material for a secondary battery according to the present invention will be described.

### (Negative electrode active material)

### Metal or metal compound;

The negative electrode active material contains a metal or a metal compound that can absorb and release an alkali metal ion or an alkaline earth metal ion. Examples of the alkali metal ion include a lithium ion, a sodium ion, and a potassium ion. Examples of the alkaline earth metal include a calcium ion and a magnesium ion. Among the alkali metal ions and the alkaline earth metal ions, the metal or the metal compound can preferably absorb and release a lithium ion.

As the metal or the metal compound, Co, Mn, Ni, P, Sn, Ge, Si, Ti, Zr, V, Al, or a compound thereof can be used. Among the metals and the metal compounds, Si, a compound of Si, Sn, and a compound of Sn are preferable. The compound of Si is preferably an alloy of Si and another metal, an oxide of Si, such as SiO or SiO₂, or the like. The compound of Sn is preferably an alloy of Sn and another metal, an oxide of Sn, such as SnO or SnO₂, or the like. In this case, the capacity of the negative electrode material for a secondary battery can be further increased. The metals and the metal compounds may be used singly or in combination of two or more kinds thereof.

The average particle size of the metal or the metal compound is not particularly limited. However, the average particle size of the metal or the metal compound is preferably 10 nm or more and more preferably 20 nm or more, and preferably 1,000 nm or less and more preferably 500 nm or less. When the average particle size of the metal or the metal compound is in the above-described range, a further good cycle characteristic and further good initial coulombic efficiency can be obtained. The average particle size is a value calculated by volume-based distribution using a particle size distribution measuring device by a dynamic light scattering method or a particle size distribution measuring device by a laser diffraction method.

The shape of the metal or the metal compound is not particularly limited, and the metal or the metal compound having, for example, a spherical shape, a substantially spherical shape, a flaky shape, a flat shape, an elliptical shape, a substantially elliptical shape, or the like can be used. In addition to the above-described shapes, the metal or the metal compound having a structure having a hollow or porous inside can be used. Among the shapes, a spherical shape or a substantially spherical shape is preferable.

The metal or the metal compound may be coated with a carbon material. In this case, the electrode performance of the negative electrode material for a secondary battery can be further enhanced. As such a carbon material, for example, amorphous carbon, crystalline carbon, or the like can be used. Among the carbon materials, the metal or the metal compound is preferably coated with amorphous carbon because, in such a case, the coating layer is relatively easily produced and the conductivity and the ion permeability of the coating layer have no anisotropy.

Furthermore, when provided on the surface of the metal or the metal compound, the coating layer containing amorphous carbon exhibits a stabilizing effect against the change in the shape of the negative electrode active material, and the bondability and the adhesiveness to a conductive auxiliary or a binder is further excellent because the coating layer has high adhesiveness and high followability to the negative electrode active material against the volume expansion and contraction during the charge and discharge. As a result, cracking and peeling from a current collector are less likely to occur during the charge and discharge, and further good charge and discharge cycle stability can be realized.

Furthermore, because the active site on the surface of the metal or the metal compound is inactivated by the coating to suppress the decomposition of the electrolyte solution, the amount of the insoluble salt precipitated on the surface of the metal or the metal compound is significantly reduced, and it is possible to prevent deterioration of the battery characteristic due to excessive formation of an SEI film. The coating layer does not require a high temperature firing process and can be produced by a simple process.

The coating layer may be formed on at least a part of the surface of the metal or the metal compound, or may be formed so as to coat the entire surface of the metal or the metal compound. In order to further exhibit the coating effect, the coating layer is preferably formed so as to coat the entire surface of the metal or the metal compound continuously and uniformly.

The amorphous carbon included in the coating layer is preferably derived from carbon contained in an oxazine resin. Because the oxazine resin can be carbonized at a low temperature, the cost can be reduced. Examples of the oxazine resin include a benzoxazine resin and a naphthoxazine resin. Among them, the naphthoxazine resin is preferable because it is most easily carbonized at a low temperature. Examples of the raw material used for manufacturing the naphthoxazine resin include dihydroxynaphthalene that is a phenol, formaldehyde, and amines. A derivative of triazine can be used instead of the formaldehyde and the amines. The derivative of triazine is preferably substituted triazine at the N position. The derivative of triazine is more preferably 1,3,5-trimethylhexahydro-1,3,5-triazine. The naphthoxazine resin can be formed by dissolving the raw material in a suitable solvent and reacting the raw material with the solvent.

More specifically, the amorphous carbon included in the coating layer is preferably produced by heat-treating the oxazine resin at a temperature of 150 to 350°C. By using the naphthoxazine resin that can be carbonized at a low temperature, the amorphous carbon can be produced at a further low temperature. Because the amorphous carbon can be obtained at such a low temperature, the amorphous carbon has an advantage that it can be produced at a lower cost and by a simpler process than ever before. The temperature of the heat treatment is more preferably 170 to 300°C. However, the temperature of the heat treatment may be 350 to 800°C depending on the purpose. The obtained coating layer is a dense film having pores having a size of a molecular, allows an alkali metal ion or an alkaline earth metal ion to freely pass through the coating layer, and at the same time, can inactivate the active site on the surface of the active material that causes the decomposition of the electrolyte solution.

The coating layer may contain an element other than carbon. Examples of the element other than carbon include nitrogen, hydrogen, and oxygen. The content of such an element is preferably 10 atomic% or less based on the total of the carbon and the element other than carbon.

The coating layer preferably contains nitrogen at a content of 0 to 5% by weight. By setting the nitrogen content in the above-described range, it is possible to obtain a coating layer having a more excellent physical property than a pure carbon film.

The coating layer preferably has a film thickness of 0.5 nm to 1.0 µm. When the coating layer has a film thickness in the above-described range, the coating layer has further appropriate flexibility, and the charge and discharge characteristic can be further improved. The upper limit of the film thickness of the coating layer is more preferably 500 nm. The more preferable lower limit of the film thickness of the coating layer is not particularly limited, and is, for example, 1 nm.

### First carbon material;

The negative electrode active material contains a first carbon material that can absorb and release the alkali metal ion or the alkaline earth metal ion. The first carbon material is preferably a carbon material having a graphene layered structure. In this case, the conductivity of the negative electrode material for a secondary battery can be further enhanced.

Examples of the first carbon material include artificial graphite and natural graphite.

The shape of the first carbon material is not particularly limited, and the first carbon material having, for example, a flaky shape, a flat shape, a spherical shape, a substantially spherical shape, an elliptical shape, a substantially elliptical shape, or the like can be used. Among the shapes, a substantially spherical shape or a substantially elliptical shape is preferable. When the particle of the first carbon material is not spherical, the cross section of the particle is observed with an electron microscope and analyzed using image processing software (such as "WinRoof" (product number) manufactured by MITANI CORPORATION) to determine the ratio of the short diameter to the long diameter of the particle cross section equivalent to an ellipse (short diameter/long diameter). The first carbon material preferably has a particle cross section equivalent to an ellipse having an average ratio of the short diameter to the long diameter (short diameter/long diameter) of 0.2 or more and preferably 1.0 or less.

By setting the ratio (short diameter/long diameter) in the above-described range, the packing property and the contact property between the active materials at the time of forming the electrode film are improved, and the characteristic as an electrode can be further improved. The shape of the first carbon material can be confirmed by, for example, a scanning electron microscope (SEM) or a transmission electron microscope (TEM). The ratio of the short diameter to the long diameter of the particle cross section equivalent to an ellipse can be determined, as described above, from an electron micrograph of the particle using image processing software (such as "WinRoof" (product number) manufactured by MITANI CORPORATION).

As a method for manufacturing the first carbon material having a substantially spherical shape or a substantially elliptical shape, mechanical spheroidizing of natural graphite having a flaky shape or a flat shape can be employed. As artificial graphite, a mesocarbon microbead (MCMB) can be produced by firing, at high temperature, a carbon precursor obtained from petroleum pitch or coal tar pitch. Among the carbon materials, the mesocarbon microbead is preferable because the carbon hexagonal mesh surface inside the mesocarbon microbead has a lamellar orientation and can smoothly absorb and release the alkali metal ion or the alkaline earth metal ion from all directions. Note that normal graphite can absorb and release a lithium ion only from the edge surface.

The first carbon material preferably has a specific gravity of 2.0 g/cm³ or more and 2.5 g/cm³ or less, and more preferably 2.3 g/cm³ or less as measured by a helium gas displacement method. In this case, the crystallinity of the graphite is sufficiently developed, and the conductivity and the absorbing or releasing property for the alkali metal ion or the alkaline earth metal ion can be further favorably kept.

The weight ratio of the metal or the metal compound to the first carbon material in the negative electrode active material (metal or metal compound/first carbon material) is preferably 1/99 or more and more preferably 3/97 or more, and preferably 45/55 or less and more preferably 35/65 or less. When the weight ratio (metal or metal compound/first carbon material) is the above-described lower limit or more, the capacity of the negative electrode material for a secondary battery can be further increased. When the weight ratio (metal or metal compound/first carbon material) is the above-described upper limit or less, the deterioration of the cycle characteristic during the charge and discharge of the secondary battery can be further prevented, and the initial coulombic efficiency can be further enhanced.

The content of the negative electrode active material is preferably 50% by weight or more and more preferably 60% by weight or more, and preferably 98% by weight or less and more preferably 95% by weight or less based on 100% by weight of the total negative electrode material for a secondary battery. When the content of the negative electrode active material is the above-described lower limit or more, the capacity of the secondary battery can be further increased. When the content of the negative electrode active material is the above-described upper limit or less, the content of the conductive auxiliary can be further increased, and the conductivity can be further enhanced.

The surface of the first carbon material may be coated with another carbon material. In this case, the surface of the carbon material particle can be further stabilized, and the electrolyte solution decomposition reaction on the surface of the particle can be further reliably suppressed during the charge and discharge. As another carbon material with which the surface of the first carbon material is coated, the same carbon material as the carbon material used for coating the surface of the metal or the metal compound can be used. The method for coating is not particularly limited, and examples of the method include known vapor phase methods (such as a CVD method) and liquid phase methods by a solution process.

### (Conductive auxiliary)

The conductive auxiliary contains a second carbon material different from the first carbon material. The second carbon material is partially exfoliated graphite having a graphite structure in which graphite is partially exfoliated.

Note that the phrase "graphite is partially exfoliated" means that a graphene laminate has graphene layers separated in the range from the edge to the inside to some extent, that is, a part of the graphite is exfoliated at the edge. In addition, the phrase means that the graphite layers are stacked in the central portion in the same manner as in the original graphite or the primary exfoliated graphite. Furthermore, the portion where a part of the graphite is exfoliated at the edge leads to the central portion. The partially exfoliated graphite in this case may include exfoliated graphite whose edge is exfoliated.

As described above, in the central portion of the partially exfoliated graphite, the graphite layers are stacked in the same manner as in the original graphite or the primary exfoliated graphite. Therefore, in the partially exfoliated graphite, the degree of graphitization is higher than that in conventional graphene oxides and carbon blacks, and the conductivity is further excellent. Furthermore, because the partially exfoliated graphite has a structure in which graphite is partially exfoliated, the specific surface area is large. In addition, because the partially exfoliated graphite has a flat plate shape and a two-dimensional spread, a further good electron conduction path can be formed in the negative electrode, and the conductivity can be further enhanced.

The graphite is a laminate of a plurality of graphene layers. As the graphite, natural graphite, artificial graphite, expanded graphite, or the like can be used. The expanded graphite has a larger interlayer distance between the graphene layers than normal graphite. Therefore, the expanded graphite can be easily exfoliated.

In the graphite, the number of the stacked graphene sheets (graphene stacking number) is about 100,000 to 1,000,000, and the graphene has a specific surface area by BET method (BET specific surface area) of less than 25 m²/g.

The exfoliated graphite is produced by exfoliating the original graphite, and the word "exfoliated graphite" refers to a graphene sheet laminate thinner than the original graphite. The number of the stacked graphene sheets in the exfoliated graphite is required to be smaller than that in the original graphite.

In the exfoliated graphite, the graphene stacking number is preferably 1,000 or less, and more preferably 500 or less. When the graphene stacking number is the above-described upper limit or less, the specific surface area can be further increased.

In the present invention, the graphene stacking number in the part where the graphite is partially exfoliated is preferably 5 or more and 3,000 or less. The number is more preferably 5 or more and 1,000 or less, and still more preferably 5 or more and 500 or less.

When the graphene stacking number is less than the above-described lower limit, the carbon materials in the negative electrode are sometimes difficult to connect because the graphene stacking number in the part where the graphite is partially exfoliated is small. Therefore, the conductivity of the negative electrode is sometimes not sufficiently enhanced.

When the graphene stacking number is more than the above-described upper limit, the size of one partially exfoliated graphite is extremely large, and the distribution of the partially exfoliated graphite in the negative electrode is sometimes uneven. Therefore, a good electron conduction path is sometimes not formed in the negative electrode.

The method of calculating the graphene stacking number is not particularly limited, and the number can be calculated by visual observation with a TEM or the like.

The partially exfoliated graphite can be manufactured by, for example, the method for manufacturing described in WO 2014/034156. Specifically, a composition containing graphite or primary exfoliated graphite and a resin that is fixed to the graphite or the primary exfoliated graphite by grafting or adsorption is prepared, and the resin is thermally decomposed to obtain the partially exfoliated graphite. The resin contained in the composition is preferably removed, but a part of the resin may remain. The primary exfoliated graphite is produced by exfoliating graphite, and the specific surface area of the primary exfoliated graphite is required to be larger than that of graphite.

By the thermal decomposition, the distance between the graphene layers in the graphite or the primary exfoliated graphite is increased. More specifically, in the laminate of the graphene such as the graphite or the primary exfoliated graphite, the graphene layers are separated in the range from the edge to the inside to some extent. That is, it is possible to obtain a structure in which a part of the graphite is exfoliated and the graphite layers are stacked in the central portion in the same manner as in the original graphite or the primary exfoliated graphite.

When the resin remains in the partially exfoliated graphite, the amount of the residual resin is preferably 1 part by weight or more and 350 parts by weight or less based on 100 parts by weight of the partially exfoliated graphite excluding the resin component. The amount is more preferably 5 parts by weight or more and 50 parts by weight or less, and still more preferably 5 parts by weight or more and 30 parts by weight or less.

When the amount of the residual resin is less than the above-described lower limit, the BET specific surface area is sometimes not secured. When the amount of the residual resin is more than the above-described upper limit, the manufacturing cost is sometimes increased. The amount of the residual resin can be calculated by, for example, a thermogravimetric analysis (hereinafter, referred to as TG) in which the weight change due to the heating temperature is measured.

The resin used for producing the composition in which the resin is fixed to the graphite or the primary exfoliated graphite by grafting or adsorption is not particularly limited, and is preferably a polymer of a radically polymerizable monomer. The polymer of a radically polymerizable monomer may be a copolymer including a plurality of kinds of radically polymerizable monomers, or a homopolymer including one kind of radically polymerizable monomers.

Examples of the resin include polypropylene glycol, polyglycidyl methacrylate, polyvinyl acetate, polyvinyl butyral, polyacrylic acid, and polyethylene glycol.

When the partially exfoliated graphite having a specific gravity in the above-described range is used as a second carbon material, it is possible to further efficiently form the conduction path between the active materials including the metal or the metal compound and the first carbon material, and, particularly, the conduction path between the metal particles or the metal compound particles having a small particle size to conduct because the second carbon material has more excellent flexibility and larger specific surface area than the first carbon material. In the partially exfoliated graphite, the specific surface area is large, and in addition, the graphene layers are separated in the range from the edge to the inside to some extent. Therefore, the metal particle or the metal compound particle having a small particle size are adsorbed or included on the surface or the inside of the separated layers, and the stress change due to the volume change of the metal or the metal compound during the charge and discharge can be further relaxed. As a result, the cycle characteristic and the initial coulombic efficiency of the secondary battery can be further improved.

In the partially exfoliated graphite, the Raman spectrum obtained by Raman spectroscopy preferably has a ratio D/G of the peak intensity in the D band to the peak intensity in the G band of 0.8 or less, and more preferably 0.7 or less. When the ratio D/G is in this range, the conductivity of the partially exfoliated graphite itself can be further enhanced, and at the same time, the decomposition of the electrolyte solution on the surface of the active material can be further suppressed. The ratio D/G is preferably 0.03 or more, and more preferably 0.05 or more. In this case, the high conductivity and the large specific surface area can be maintained in good balance, and the cycle characteristic can be further improved.

The BET specific surface area of the partially exfoliated graphite is preferably 30 m²/g or more and more preferably 50 m²/g or more, and preferably 2,500 m²/g or less. When the BET specific surface area of the partially exfoliated graphite is the above-described lower limit or more, a further good electron conduction path can be formed in the negative electrode. When the BET specific surface area of the partially exfoliated graphite is the above-described upper limit or less, the handleability during the electrode production can be further enhanced.

When the methylene blue adsorption amount per 1 g of the partially exfoliated graphite (µmol/g) is y and the BET specific surface area of the partially exfoliated graphite (m²/g) is x, the ratio y/x is preferably 0.15 or more, more preferably 0.15 or more and 1.0 or less, and still more preferably 0.2 or more and 0.9 or less.

The methylene blue adsorption amount (µmol/g) is measured as follows. First, the absorbance of a methanol solution of 10 mg/L concentration of methylene blue (blank) is measured. Next, a measurement target (partially exfoliated graphite) is put into the methanol solution of methylene blue, and the absorbance of the supernatant obtained by centrifugation (sample) is measured. Finally, the methylene blue adsorption amount per 1 g (µmol/g) is calculated from the difference between the absorbance (blank) and the absorbance (sample).

The methylene blue adsorption amount correlates with the specific surface area of the partially exfoliated graphite determined by BET method. In the case of a conventionally known graphite particle having a spherical shape, when the BET specific surface area (m²/g) is x and the methylene blue adsorption amount (µmol/g) is y, there is a relationship of y ≈ 0.13x. This relationship indicates that the larger the BET specific surface area is, the larger the methylene blue adsorption amount is. Therefore, the methylene blue adsorption amount can be used as an index instead of the BET specific surface area.

As described above, the ratio y/x of the partially exfoliated graphite is preferably 0.15 or more. In the case of a conventional graphite particle having a spherical shape, the ratio y/x is 0.13. Therefore, when the ratio y/x is 0.15 or more, the methylene blue adsorption amount of the partially exfoliated graphite is larger than that of the conventional spherical graphite having the same BET specific surface area as the partially exfoliated graphite. That is, in this case, although some condensation occurs in a dry state, the distance between the graphene layers or the graphite layers can be more increased in a wet state such as in methanol than in the dry state.

The surface of the second carbon material including the partially exfoliated graphite may be coated with another carbon material, if necessary. In this case, the affinity for the active material (the first carbon material and the metal or the metal compound) and the affinity for a binder resin can be further improved, and the characteristic of the battery can be further improved. As another carbon material with which the surface of the second carbon material is coated, the same carbon material as the carbon material used for coating the surface of the metal or the metal compound can be used.

The conductive auxiliary may further contain a third carbon material different from the second carbon material. The third carbon material is not particularly limited, and examples of the third carbon material include graphene, granular graphite compounds, fibrous graphite compounds, and carbon blacks.

The graphene may be graphene oxide or reduced graphene oxide.

The granular graphite compounds are not particularly limited, and examples of the granular graphite compounds include natural graphite, artificial graphite, and expanded graphite.

The fibrous graphite compounds are not particularly limited, and examples of the fibrous graphite compounds include carbon nanotubes, carbon fibers, and carbon nanohorn.

The carbon blacks are not particularly limited, and examples of the carbon blacks include furnace black, Ketjen black, and acetylene black.

On the surface of the third carbon material, a functional group may be present.

The third carbon material may be used singly or in combination of two or more kinds.

The first to third carbon materials can be distinguished from each other by the shape and the size of the particles using, for example, an SEM or a TEM. The first to third carbon materials can also be distinguished from each other by measurement of the element composition using photoelectron spectroscopy (XPS) or by the crystallinity evaluation of the particles using an X-ray diffraction method.

In the present invention, the weight ratio of the second carbon material to the third carbon material (second carbon material/third carbon material) is preferably 5/95 or more and more preferably 10/90 or more, and preferably 99/1 or less and more preferably 95/5 or less. When the weight ratio (second carbon material/third carbon material) is in the above-described range, the conductivity of the negative electrode material for a secondary battery can be further enhanced.

In the present invention, the content of the conductive auxiliary is preferably 0.1% by weight or more, more preferably 0.5% by weight or more, and still more preferably 1.0% by weight or more, and preferably 20% by weight or less, more preferably 15% by weight or less, still more preferably 10% by weight or less, and particularly preferably 8.0% by weight or less based on 100% by weight of the total negative electrode material for a secondary battery. When the content of the conductive auxiliary is the above-described lower limit or more, the conductivity of the negative electrode material for a secondary battery can be further sufficiently kept. When the content of the conductive auxiliary is the above-described upper limit or less, the content of the negative electrode active material can be further increased, and the capacity of the secondary battery can be further increased.

The content of the second carbon material is preferably 0.1% by weight or more, more preferably 0.5% by weight or more, and still more preferably 1.0% by weight or more, and preferably 20% by weight or less, more preferably 15% by weight or less, still more preferably 10% by weight or less, and particularly preferably 8.0% by weight or less based on 100% by weight of the total negative electrode material for a secondary battery. When the content of the second carbon material is the above-described lower limit or more, the conductivity of the negative electrode material for a secondary battery can be further enhanced. When the content of the second carbon material is the above-described upper limit or less, the content of the negative electrode active material can be further increased, and the capacity of the secondary battery can be further increased.

In the present invention, the weight ratio of the second carbon material to the first carbon material (second carbon material/first carbon material) is preferably 0.005 or more and more preferably 0.007 or more, and preferably 0.5 or less, more preferably 0.4 or less, and still more preferably 0.35 or less. When the weight ratio (second carbon material/first carbon material) is the above-described lower limit or more, the conductivity of the negative electrode material for a secondary battery can be further reliably secured. When the weight ratio (second carbon material/first carbon material) is the above-described upper limit or less, the conductivity of the secondary battery is further sufficiently secured, and at the same time, the stress due to the expansion and contraction of the volume of the active material during the charge and discharge can be further relaxed. As a result, the deterioration of the cycle characteristic during the charge and discharge of the secondary battery can be further prevented, and the initial coulombic efficiency can be further enhanced.

### (Binder resin)

The negative electrode material for a secondary battery according to the present invention may further include a binder resin. In this case, the negative electrode can be further easily produced.

The binder resin is not particularly limited, and, for example, styrene-butadiene rubber, carboxymethyl cellulose, polyvinylidene fluoride (PVdF), a polyimide, an acrylic resin, a butyral resin, or a derivative thereof can be used. The binder may be used singly or in combination of two or more kinds.

The binder resin is preferably dissolved or dispersed in a nonaqueous solvent or water from the viewpoint of further easily producing the negative electrode.

The nonaqueous solvent is not particularly limited, and examples of the nonaqueous solvent include N-methyl-2-pyrrolidone (NMP), dimethylformamide, dimethylacetamide, methyl ethyl ketone, methyl acetate, ethyl acetate, and tetrahydrofuran. A dispersant and a thickener may be added to the nonaqueous solvent.

The content of the binder resin is preferably 0.5% by weight or more and more preferably 1.0% by weight or more, and preferably 30% by weight or less and more preferably 25% by weight or less based on 100% by weight of the total negative electrode material for a secondary battery. When the amount of the binder resin is in the above-described range, the bondability between the negative electrode active material and the conductive auxiliary can be maintained, and the bondability to the current collector can be further enhanced.

### [Secondary battery and negative electrode for secondary battery]

Examples of the secondary battery according to the present invention include nonaqueous electrolyte secondary batteries, aqueous electrolyte secondary batteries, sulfur batteries, and lithium-sulfur batteries. Among the secondary batteries, the nonaqueous electrolyte secondary batteries are preferable, and among the nonaqueous electrolyte secondary batteries, those in which a lithium ion is used can be suitably used. Hereinafter, a nonaqueous electrolyte secondary battery in which a lithium ion is used (hereinafter, referred to as a lithium ion secondary battery) will be exemplified.

The positive electrode and the negative electrode of the nonaqueous electrolyte secondary battery may have a form in which the same electrodes are formed on one side or both sides of the current collector, or may have a form in which the positive electrode is formed on one side of the current collector and the negative electrode is formed on the other side, that is, may be a bipolar electrode.

The nonaqueous electrolyte secondary battery may be a wound laminate of the positive electrode and the negative electrode with a separator interposed therebetween or may be stacked laminates. The positive electrode, the negative electrode, and the separator contain a nonaqueous electrolyte that serves lithium ion conduction.

After the winding of the laminate or the stacking of the laminates, an exterior that is a laminate film or is a metal can having a square shape, an ellipse shape, a cylindrical shape, a coin shape, a button shape, or a sheet shape may be set on the nonaqueous electrolyte secondary battery. The exterior may have a mechanism for releasing the generated gas. The stacking number of the laminates is not particularly limited, and the laminates can be stacked until a desired voltage value and battery capacity are developed.

The nonaqueous electrolyte secondary battery can be an assembled battery in which batteries are appropriately connected in series or parallel depending on the desired size, capacity, and voltage. It is preferable that a control circuit is attached to the assembled battery in order to confirm the state of charge of each battery and improve the safety.

### (Negative electrode)

The negative electrode includes the negative electrode material for a secondary battery according to the present invention. Therefore, in the secondary battery in which the negative electrode is used, the deterioration of the cycle characteristic during the charge and discharge is prevented, and the initial coulombic efficiency is enhanced.

Examples of the method for producing the negative electrode include a method in which a mixture of the negative electrode active material, the carbon material, and the binder resin is formed on a current collector.

From the viewpoint of the further easy production, the negative electrode is preferably produced as described below. First, to the negative electrode active material including the metal or the metal compound and the first carbon material, and the second carbon material, a binder solution or a dispersing liquid is added and mixed to produce a slurry. Next, the produced slurry is applied to a current collector, and finally, the solvent is removed to produce a negative electrode.

Examples of the method of producing the slurry include a method in which a mixer or the like is used for mixing. The mixer used for the mixing is not particularly limited, and examples of the mixer include planetary mixers, dispersers, thin-film spin mixers, jet mixers, and rotation/revolution mixers.

From the viewpoint of the further easy application, the solid content concentration of the slurry is preferably 30% by weight or more and 98% by weight or less. From the viewpoint of further enhancing the storage stability, the solid content concentration of the slurry is more preferably 35% by weight or more and 95% by weight or less. Furthermore, from the viewpoint of further suppressing the manufacturing cost, the solid content concentration of the slurry is more preferably 40% by weight or more and 92% by weight or less.

The solid content concentration can be controlled with a diluting solvent. As the diluting solvent, it is preferable to use the same solvent as the binder solution or the dispersing liquid. Another solvent may be used as long as the solvent is compatible.

The current collector used in the negative electrode is preferably copper, SUS, nickel, titanium, aluminum, or an alloy containing such a metal. The current collector may be a metal material (copper, SUS, nickel, titanium, or an alloy containing such a metal) coated with a metal that does not react at the potential of the negative electrode.

The thickness of the current collector is not particularly limited, and is preferably 5 µm or more and 100 µm or less. When the thickness of the current collector is less than 5 µm, the current collector is sometimes difficult to handle from the viewpoint of the production. When the thickness of the current collector is more than 100 µm, the current collector is sometimes disadvantageous from the viewpoint of economy.

The method of applying the slurry to the current collector is not particularly limited, and examples of the method include a method in which the slurry is applied with a doctor blade, a die coater, a comma coater, or the like and then the solvent is removed, a method in which the slurry is applied by spraying and then the solvent is removed, and a method in which the slurry is applied by screen printing and then the solvent is removed.

The method of removing the solvent is preferably a method of drying in which a blow oven or a vacuum oven is used from the viewpoint of further simplicity. Examples of the atmosphere in which the solvent is removed include an air atmosphere, an inert gas atmosphere, and a vacuum state. The temperature at which the solvent is removed is not particularly limited, and is preferably 60°C or more and 350°C or less, although the temperature depends on the kind of the used solvent. When the temperature at which the solvent is removed is less than 60°C, the removal of the solvent sometimes takes time. When the temperature at which the solvent is removed is more than 350°C, the binder resin sometimes deteriorates.

The negative electrode may be compressed to a desired thickness and density. The compression is not particularly limited, and can be performed using, for example, a roll press, a hydraulic press, a cold isostatic press (CIP), a hot isostatic press (HIP), or the like.

The thickness of the negative electrode after the compression is not particularly limited, and is preferably 1 µm or more and 1,000 µm or less. When the thickness is less than 1 µm, it is sometimes difficult to obtain a desired capacity. When the thickness is more than 1,000 µm, it is sometimes difficult to obtain a desired output density.

### (Positive electrode)

The positive electrode is not particularly limited, and is required to contain, for example, a compound having a higher average potential of desorption and insertion of a lithium ion than the negative electrode active material, that is, a positive electrode active material. Examples of the compound include compounds having a layered rock salt structure represented by lithium cobalt oxide and lithium nickel oxide, compounds having a spinel structure represented by lithium manganate, compounds having an olivine structure represented by lithium iron olivine, and mixtures thereof.

### (Separator)

The separator is required to be placed between the positive electrode and the negative electrode, and have an insulating property and a structure in which the nonaqueous electrolyte described below can be included. Examples of the material for the separator include nylon, cellulose, polysulfone, polyethylene, polypropylene, polybutene, polyacrylonitrile, polyimides, polyamides, polyethylene terephthalate, and woven fabrics, nonwoven fabrics, and microporous membranes, including a composite of the two or more above-described polymers.

The separator may contain a plasticizer, an antioxidant, or a flame retardant, or may be coated with a metal oxide or the like.

The thickness of the separator is not particularly limited, and is preferably 5 µm or more and 100 µm or less. When the thickness of the separator is less than 5 µm, the positive electrode and the negative electrode sometimes come into contact with each other. When the thickness of the separator is more than 100 µm, the resistance of the battery is sometimes increased. The thickness of the separator is more preferably 10 µm or more and 50 µm or less from the viewpoint of further enhancing the economic efficiency and the handleability.

### (Nonaqueous electrolyte)

The nonaqueous electrolyte used in the nonaqueous electrolyte secondary battery is not particularly limited, and a gel electrolyte in which a polymer is impregnated with an electrolyte solution of a solute dissolved in a nonaqueous solvent, a polymer solid electrolyte such as polyethylene oxide or polypropylene oxide, or an inorganic solid electrolyte such as sulfide glass or oxynitride can be used.

The nonaqueous solvent preferably contains a cyclic aprotic solvent and/or a chain aprotic solvent because the solute described below is further easily dissolved. Examples of the cyclic aprotic solvent include cyclic carbonates, cyclic esters, cyclic sulfones, and cyclic ethers. Examples of the chain aprotic solvent include chain carbonates, chain carboxylates, and chain ethers. In addition to the above-described solvents, a solvent, such as acetonitrile, generally used as a solvent for a nonaqueous electrolyte may be used. More specifically, dimethyl carbonate, methyl ethyl carbonate, dimethyl carbonate, dipropyl carbonate, methyl propyl carbonate, ethylene carbonate, propylene carbonate, butylene carbonate, γ-butyrolactone, 1,2-dimethoxyethane, sulfolane, dioxolane, methyl propionate, or the like can be used. These solvents may be used singly, or the two or more solvents may be mixed and used. It is preferable to use a solvent in which the two or more solvents are mixed from the viewpoints of further easily dissolving the solute described below and further enhancing the conductivity of a lithium ion.

The solute is not particularly limited, and, for example, LiClO₄, LiBF₄, LiPF₆, LiAsF₆, LiCF₃SO₃, LiBOB (Lithium Bis(Oxalato)Borate), and LiN(SO₂CF₃)₂ are preferable. In this case, the solute can be further easily dissolved in the solvent.

The electrolyte solution preferably contains the solute at a concentration of 0.5 mol/L or more and 10 mol/L or less. When the concentration of the solute is less than 0.5 mol/L, the desired lithium ion conductivity is sometimes not exhibited. When the concentration of the solute is more than 10 mol/L, no more solute can be dissolved in some cases. The nonaqueous electrolyte may contain a trace amount of an additive such as a flame retardant or a stabilizer.

However, the secondary battery according to the present invention may be an aqueous electrolyte secondary battery as described above. In this case, as the aqueous electrolyte solution, an aqueous solution in which a lithium salt, such as lithium nitrate, lithium sulfate, or lithium acetate, or the like is dissolved can be used.

Hereinafter, the present invention will be described more specifically with reference to Examples. However, the present invention is not limited to Examples, and can be appropriately modified as long as the gist of the present invention is not changed.

### (Manufacturing Example of second carbon material)

First, a mixture of 20 g of expanded graphite (manufactured by TOYO TANSO CO., LTD., trade name "PF Powder 8F", BET specific surface area = 22 m²/g), 0.6 g of carboxymethyl cellulose (manufactured by Sigma-Aldrich Co. LLC., average molecular weight = 250,000), and 600 g of water is prepared. The prepared mixture was irradiated with an ultrasonic wave for 7 hours using an ultrasonic treatment device (manufactured by SMT. CO., LTD., product number "UH-600SR"). Subsequently, 120 g of polyethylene glycol (manufactured by Sanyo Chemical Industries, Ltd., product number "PG600") was added, and the mixture was mixed for 60 minutes with a homomixer (manufactured by Tokushu Kika Kogyo Co., Ltd., T. K. HOMOMIXER MARK II) to produce a raw material composition.

Next, the produced raw material composition was heat-treated at 150°C to remove the water. Then, the composition from which the water had been removed was heat-treated at a temperature of 380°C for 1 hour to produce a carbon material in which a part of the polyethylene glycol remained.

Finally, the obtained carbon material was heat-treated at 400°C for 30 minutes and at 350°C for 2 hours in this order to produce a second carbon material being a partially exfoliated graphite having a graphite structure in which graphite is partially exfoliated. The obtained second carbon material contained 10% by weight of resin based on the total weight. As the amount of the resin, the amount of weight loss was calculated in the range of 200°C to 600°C using TG (manufactured by Hitachi High-Tech Science Corporation, product number "STA7300").

The ratio D/G of the peak intensity in the D band to the peak intensity in the G band in the Raman spectrum of the obtained second carbon material was measured, and the result was 0.230.

The BET specific surface area of the second carbon material was measured using a specific surface area measuring device (manufactured by SHIMADZU CORPORATION, product number "ASAP-2000", nitrogen gas), and the result was 98 m²/g.

The methylene blue adsorption amount of the second carbon material was measured in the procedure described below, and the result was 69.7 µmol/g. When the BET specific surface area was x and the methylene blue adsorption amount was y, the ratio y/x was 0.740.

The methylene blue adsorption amount was measured as follows. First, in volumetric flasks, methanol solutions of 10.0 mg/L, 5.0 mg/L, 2.5 mg/L, and 1.25 mg/L of methylene blue (manufactured by KANTO CHEMICAL CO., INC., special grade reagent) were prepared, and the absorbance of each solution was measured with an ultraviolet-visible spectrophotometer (manufactured by SHIMADZU CORPORATION, product number "UV-1600") to prepare a calibration curve. Next, 10 mg/L of methylene blue was prepared, and in a 100 mL eggplant flask, a carbon material to be measured (0.005 to 0.05 g, the amount was changed depending on the BET value of the sample), a methylene blue solution (10 mg/L, 50 mL), and a stirrer bar were added. The mixture was treated with an ultrasonic cleaner (manufactured by AS ONE CORPORATION) for 15 minutes, and then stirred for 60 minutes in a cooling bath (25°C). Furthermore, after the adsorption equilibrium was reached, the carbon material and the supernatant were separated by centrifugation, the absorbance of the blank 10 mg/L methylene blue solution and the absorbance of the supernatant were measured with an ultraviolet-visible spectrophotometer, and the difference between the absorbance of the blank and the absorbance of the supernatant was calculated.

Methylene blue adsorption amount (mol/g) = {decrease in concentration of methylene blue solution (g/L) × volume of solvent to be measured (L) }/{molecular weight of methylene blue (g/mol) × mass of carbon material used for measurement (g)}... Formula

### (Example 1)

A silicon particle as the metal or the metal compound, a graphite particle as the first carbon material, the second carbon material manufactured in the above-described Manufacturing Example, and a polyamic acid as a precursor of the binder resin were mixed at a weight ratio (silicon particle : first carbon material : second carbon material : polyamic acid) = 13.1 : 74.4 : 2.5 : 10.0 to produce a mixture. As the silicon particle, a particle manufactured by Sigma-Aldrich Co. LLC. (average particle size: < 100 nm) was used. As the graphite particle, "OMAC-R" (trade name) manufactured by Osaka Gas Chemicals Co., Ltd. (average particle size: 18 µm) was used. As the polyamic acid, "U-Varnish-A" (trade name) manufactured by Ube Industries, Ltd. was used.

Subsequently, to 5 g of the obtained mixture, an appropriate amount of N-methylpyrrolidone (NMP) as a solvent was added, and the resulting mixture was kneaded using a rotation/revolution mixer (manufactured by THINKY CORPORATION, "Neritaro AR-100") to obtain a uniform paste.

Next, the prepared paste was applied to the surface of copper foil having a thickness of 20 µm with an applicator (manufactured by TESTER SANGYO CO., LTD., trade name "PI-1210") so that the film thickness was 30 µm. After the application, the resulting product was vacuum-dried at 100°C for 1 hour, and further heat-treated at 250°C for 15 hours. As a result, a negative electrode sheet was obtained.

### (Examples 2 to 4)

A negative electrode sheet was obtained in the same manner as in Example 1 except that the weight ratio of the silicon particle (Si, the metal or the metal compound), the first carbon material, the second carbon material, and the polyamic acid (the precursor of the binder resin) was changed as shown in Table 1 below.

### (Example 5)

A negative electrode sheet was produced in the same manner as in Example 2 except that the amorphous carbon-coated silicon particle produced by the method described below was used instead of the silicon particle in Example 2.

### Production of amorphous carbon-coated silicon particle;

A silicon particle-containing solution in which 5 g of a silicon raw material particle (manufactured by Sigma-Aldrich Co. LLC., average particle size: 100 nm) and 320 g of ethanol were contained was put in a 1000 ml flask, and the flask was set in an ultrasonic bath kept at 60°C. While an ultrasonic wave and stirring were simultaneously applied to the silicon particle-containing solution, 80 g of an ethanol solution of 0.09 mol/L of 1,3,5-trimethylhexahydro-1,3,5-triazine (manufactured by Tokyo Chemical Industry Co., Ltd.) was added to the silicon particle-containing solution, and the mixture was stirred for 30 minutes. Then, 40 g of an ethanol solution of 0.09 mol/L of 1,5-DHN was put in the flask at a rate of 10 g per 1 minute. After the putting was completed, the mixture was reacted for another 5 hours.

After the reaction, the solution was filtered, and the particle was washed with ethanol three times. The washed particle was vacuum-dried overnight at 110°C to obtain a silicon particle coated with a naphthoxazine resin. Subsequently, the coated silicon particle was heated at 200°C for 10 hours in a nitrogen atmosphere, and then further heated at 600°C for 2 hours. As a result, a carbon-coated silicon particle in which the naphthoxazine resin on the particle surface was carbonized was obtained.

When the obtained carbon-coated silicon particle was measured by Raman spectroscopy using a microscopic laser Raman Nicolet Almega XR (manufactured by Thermo Fisher Scientific K.K.), a peak was observed in both the G band and the D band, and it was determined that the naphthoxazine resin had changed to amorphous carbon. The ratio of the peak intensity in the G band to that in the D band was 1.3. The wavelength of the laser light was 530 nm.

When the obtained amorphous carbon-coated silicon particle was observed with a high-resolution transmission electron microscope, a coating layer having a thickness of 4 nm was confirmed.

### (Example 6)

A SiO powder having an average particle size of 45 µm (manufactured by Sigma-Aldrich Co. LLC.) was ground by treatment with a planetary mill so that the particle size was about 5 µm. Then, the powder was coated with amorphous carbon in the same manner as in Example 5. The thickness of the coating layer was 10 nm.

Subsequently, the SiO particle coated with amorphous carbon, a graphite particle as the first carbon material (manufactured by Osaka Gas Chemicals Co., Ltd., trade name "OMAC-R" (average particle size: 18 µm)), the second carbon material manufactured in the above-described Manufacturing Example, and a polyamic acid as a precursor of the binder resin were mixed at a weight ratio (SiO particle : first carbon material : second carbon material : polyamic acid) = 17.0 : 68.0 : 5.0 : 10.0 to produce a mixture. A negative electrode sheet was produced in the same manner as in Example 1 except the above-described procedure.

### (Example 7)

To 100 g of pure water, 2.5 g of tin chloride (SnCl₂) and 3.5 g of sodium dodecyl benzenesulfonate (SDBS) were added, and the mixture was stirred for 10 hours. Then, the generated white precipitate was filtered out, washed, and dried at 80°C for 12 hours. Next, the dried powder was fired at 700°C for 8 hours (in an air atmosphere) to obtain a tin oxide (SnO₂) particle. It was confirmed by observation with an electron microscope that the obtained particle had a primary particle size of about 50 nm.

Next, the SnO₂ nanoparticle produced above was coated with amorphous carbon in the same manner as in Example 5.

Next, the SnO₂ particle coated with amorphous carbon, a graphite particle as the first carbon material (manufactured by Osaka Gas Chemicals Co., Ltd., trade name "OMAC-R" (average particle size: 18 µm)), the second carbon material manufactured in the above-described Manufacturing Example, and a polyamic acid as a precursor of the binder resin were mixed at a weight ratio (SnO₂ particle : first carbon material : second carbon material : polyamic acid) = 51.0 : 34.0 : 5.0 : 10.0 to produce a mixture. A negative electrode sheet was produced in the same manner as in Example 1 except the above-described procedure.

### (Comparative Example 1)

A negative electrode sheet was produced in the same manner as in Example 1 except that acetylene black (manufactured by Denka Company Limited, trade name "DENKA BLACK Li-100") was used as a conductive auxiliary instead of the second carbon material.

### (Comparative Example 2)

A negative electrode sheet was produced in the same manner as in Example 1 except that the first carbon material was not used, acetylene black was used, in addition to the second carbon material, as a conductive auxiliary, and the weight ratio of the silicon particle (the metal or the metal compound), the second carbon material, and the polyamic acid (the binder resin) was changed as shown in Table 1 below. As the acetylene black, "DENKA BLACK Li-100" (trade name) manufactured by Denka Company Limited was used.

### (Comparative Example 3)

A negative electrode sheet was produced in the same manner as in Example 6 except that SiO that was not coated with amorphous carbon was used, and acetylene black was used as a conductive auxiliary instead of the second carbon material.

### (Comparative Example 4)

A negative electrode sheet was produced in the same manner as in Example 7 except that SnO₂ that was not coated with amorphous carbon was used, and acetylene black was used as a conductive auxiliary instead of the second carbon material.

### (Evaluation)

### Measurement of ratio of short diameter to long diameter of particle cross section equivalent to ellipse in first carbon material;

The ratio of the short diameter to the long diameter of the particle cross section equivalent to an ellipse in the first carbon material was measured by producing a cross section of the electrode by a CP (Cross-section Polishing) method, and observing 200 or more particles using a field emission scanning electron microscope (FE-SEM, manufactured by Hitachi High-Tech Corporation, product number "S4800") (magnification: 500 times). The ratio of the short diameter to the long diameter of the particle cross section equivalent to an ellipse was analyzed using image analysis software (manufactured by MITANI CORPORATION, WinRoof), and an average of the values of 100 particles was calculated.

### Measurement of specific gravity of carbon material;

The specific gravity of each of the first carbon material and the second carbon material was measured using a dry-process automatic densimeter (manufactured by SHIMADZU CORPORATION, product number "AccuPyc II 1340"). In the densimeter, a helium gas displacement method is used, and more accurate measurement can be performed than in a conventional liquid replacement method. Specifically, first, after the calibration with a standard cell and a calibration sphere, 0.1 g of a carbon sample was put in the cell, the cell was tapped lightly, then the lid was closed, and measurement was performed automatically.

### Production of lithium ion secondary battery;

Using the negative electrode sheets in Examples 1 to 7 and Comparative Examples 1 to 4, coin cells (HS cells, manufactured by Hohsen Corp.) were produced. The entire process of assembling the coin cell was performed in a vacuum glove box with argon gas replacement.

An exploded perspective view of the structure of the coin cell is schematically shown in Fig. 1. As shown in Fig. 1, between a counter electrode 1 and a working electrode 2, a metal lithium piece 3 (Li foil having a diameter of ϕ10 mm and a thickness of 0.2 mm), a separator 4, a negative electrode sheet 5 (ϕ10 mm), a fixing jig 6 including a resin, a current collector layer 7, and a spring 8 were stacked from the counter electrode 2 side in this order. The metal lithium piece 3 is a positive electrode. As the separator 4, a polyolefin-based porous film (thickness: 25 µm) was used. As the negative electrode sheet 5, each of the negative electrode sheets in Examples 1 to 5 and Comparative Examples 1 and 2 was used. As the electrolyte solution, a 1 mol/L of LiPF₆/EC : DMC (1 : 2 v/v%) solution (manufactured by KISHIDA CHEMICAL Co., Ltd.) was used.

### Charge/discharge test;

The produced coin cell was subjected to a charge/discharge test under the conditions of a voltage in the range of 1.5 to 0.02 V and a rate of 0.2 C (charge/discharge test device: HOKUTO DENKO CORPORATION, trade name "HJ1005SD8"). Specifically, first, the coin cell was charged in a CC/CV mode from 1.5 V to 0.02 V (a process of inserting lithium into silicon). After the charging, a rest for 1 minute was given. Next, the coin cell was discharged in a CC mode from 0.02 V to 1.5 V. Next, a rest for 1 minute was given.

The results of the initial coulombic efficiency and the capacity retention rate (cycle characteristic) after 30 cycles are shown in Table 1 below.

The battery characteristic was determined in accordance with the following criteria.
Good...Initial coulombic efficiency is 70% or more, and capacity retention rate is 70% or more
Poor... Initial coulombic efficiency is less than 70%, and capacity retention rate is less than 70%

### Capacity of negative electrode material for secondary battery;

When the cycle number was plotted along the horizontal axis and the coulombic efficiency and the discharge capacity were plotted along the vertical axis from the results of the above-described charge/discharge test, the discharge capacity at which the coulombic efficiency was 95% was regarded as the capacity of the negative electrode material for a secondary battery. The results are shown in Table 1 below.

**[Table 1]**

| | Composition | | | | | | | | | | | Battery characteristic | | |
|---|---|---|---|---|---|---|---|---|---|---|---|---|---|---|
| | Negative electrode active material | | | | | | Conductive auxiliary | | Binder resin (% by weight) | Ratio (second carbon material/ first carbon material) | Capacity of negative electrode material for secondary battery (mAh/g) | Initial coulombic efficiency (%) | Capacity retention rate after 30 cycles (%) | Determination |
| | Metal or metal compound | | | First carbon material | | | Second carbon material | Carbon material other than second carbon material (% by weight) | | | | | | |
| | Kind | Presence or absence of coating | Addition amount (% by weight) | Specific gravity (g / cm³) | Ratio (short diameter/ long diameter) | Addition amount (% by weight) | Addition amount (% by weight) | | | | | | | |
| Example 1 | Si | Absent | 13.1 | 2.25 | 0.35 | 74.4 | 2.5 | 0 | 10.0 | 0.03 | 745.0 | 70.6 | 75.6 | Good |
| Example 2 | Si | Absent | 12.8 | 2.25 | 0.35 | 72.2 | 5.0 | 0 | 10.0 | 0.07 | 707.6 | 75.1 | 81.7 | Good |
| Example 3 | Si | Absent | 12.0 | 2.25 | 0.35 | 68.0 | 10.0 | 0 | 10.0 | 0.15 | 681.3 | 79.4 | 90.3 | Good |
| Example 4 | Si | Absent | 11.3 | 2.25 | 0.35 | 63.7 | 15.0 | 0 | 10.0 | 0.24 | 638.5 | 72.2 | 84.4 | Good |
| Example 5 | Si | Present | 12.8 | 2.25 | 0.35 | 72.2 | 5.0 | 0 | 10.0 | 0.07 | 723.7 | 82.5 | 92.1 | Good |
| Example 6 | SiO | Present | 17.0 | 2.25 | 0.35 | 68.0 | 5.0 | 0 | 10.0 | 0.07 | 540.0 | 88.0 | 96.2 | Good |
| Example 7 | SnO₂ | Present | 51.0 | 2.25 | 0.35 | 34.0 | 5.0 | 0 | 10.0 | 0.15 | 450.0 | 83.0 | 89.1 | Good |
| Comparative Example 1 | Si | Absent | 12.8 | 2.25 | 0.35 | 72.2 | 0.0 | 5 | 10.0 | 0.00 | 683.5 | 59.3 | 42.3 | Poor |
| Comparative Example 2 | Si | Absent | 12.8 | - | - | 0.0 | 72.2 | 5 | 10.0 | - | 723.7 | 25.5 | 65.8 | Poor |
| Comparative Example 3 | SiO | Absent | 17.0 | 2.25 | 0.35 | 68.0 | 0.0 | 5 | 10.0 | 0.00 | 480 | 65.1 | 59.2 | Poor |
| Comparative Example 4 | SnO₂ | Absent | 51.0 | 2.25 | 0.35 | 34.0 | 0.0 | 5 | 10.0 | 0.00 | 405 | 54.3 | 56.2 | Poor |

### EXPLANATION OF SYMBOLS

1: Counter electrode
2: Working electrode
3: Metal lithium piece
4: Separator
5: Negative electrode sheet
6: Fixing jig
7: Current collector electrode
8: Spring

## Claims

1. A negative electrode material for a secondary battery, comprising:
a negative electrode active material containing a metal or a metal compound that can absorb and release an alkali metal ion or an alkaline earth metal ion, and containing a first carbon material that can absorb and release the alkali metal ion or the alkaline earth metal ion; and
a conductive auxiliary containing a second carbon material different from the first carbon material,
the negative electrode material having a capacity of 400 mAh/g or more, and
the second carbon material being partially exfoliated graphite having a graphite structure in which graphite is partially exfoliated.

2. The negative electrode material for a secondary battery according to Claim 1, wherein a capacity of the negative electrode material for a secondary battery is 400 mAh/g or more and 3,000 mAh/g or less.

3. The negative electrode material for a secondary battery according to Claim 1 or 2, wherein the metal or the metal compound is at least one selected from a group consisting of Co, Mn, Ni, P, Sn, Ge, Si, Ti, Zr, V, Al, and compounds thereof.

4. The negative electrode material for a secondary battery according to Claim 3, wherein the metal or the metal compound is Si or a compound of Si.

5. The negative electrode material for a secondary battery according to any one of Claims 1 to 4, wherein a coating layer containing a carbon material is provided on a surface of the metal or the metal compound.

6. The negative electrode material for a secondary battery according to any one of Claims 1 to 5, wherein the first carbon material is a carbon material having a graphene layered structure.

7. The negative electrode material for a secondary battery according to any one of Claims 1 to 6, wherein the first carbon material has a particle cross section equivalent to an ellipse having an average ratio of a short diameter to a long diameter (short diameter/long diameter) of 0.20 or more as observed by an electron microscope.

8. The negative electrode material for a secondary battery according to any one of Claims 1 to 7, wherein the first carbon material has a specific gravity of 2.0 g/cm³ or more as measured by a helium gas displacement method.

9. The negative electrode material for a secondary battery according to any one of Claims 1 to 8, wherein the second carbon material is contained in the negative electrode material for a secondary battery at a content of 20% by weight or less.

10. The negative electrode material for a secondary battery according to any one of Claims 1 to 9, wherein a ratio of the content of the second carbon material to a content of the first carbon material (second carbon material/first carbon material) is 0.5 or less.

11. A negative electrode for a secondary battery, comprising the negative electrode material for a secondary battery according to any one of Claims 1 to 10.

12. A secondary battery comprising the negative electrode for a secondary battery according to Claim 11.
